(19) **Europäisches Patentamt / European Patent Office / Office européen des brevets**

(11) **EP 1 114 307 B1**

(12) **EUROPEAN PATENT SPECIFICATION**

(45) Date of publication and mention
of the grant of the patent:
**05.05.2010 Bulletin 2010/18**

(51) Int Cl.:
**G01N 1/22** (2006.01)     **G01N 1/34** (2006.01)

(21) Application number: **99946434.0**

(22) Date of filing: **10.09.1999**

(86) International application number:
**PCT/IT1999/000286**

(87) International publication number:
**WO 2000/016063 (23.03.2000 Gazette 2000/12)**

(54) **DIFFUSIVE SAMPLING DEVICE FOR MONITORING ORGANIC VAPOURS IN AMBIENT AIR**

VORRICHTUNG ZUR PROBENENTNAHME MITTELS DIFFUSIVEN TRANSFER ZUR ÜBERWACHUNG VON ORGANISCHEN DÄMPFEN IN RAUMLUFT

DISPOSITIF D'ECHANTILLONNAGE DIFFUSIF POUR CONTROLER DES VAPEURS ORGANIQUES DANS L'AIR AMBIANT

(84) Designated Contracting States:
**AT BE CH CY DE DK ES FI FR GB GR IE IT LI LU MC NL PT SE**

(30) Priority: **11.09.1998 IT RM980584**

(43) Date of publication of application:
**11.07.2001 Bulletin 2001/28**

(73) Proprietor: **CONSIGLIO NAZIONALE DELLE RICERCHE**
**00185 Roma (IT)**

(72) Inventors:
• **BERTONI, G.**
**Ist. sull'Inquinam. Atmosfer. C.N.R.**
**00016 Monterotondo Scalo (IT)**
• **TAPPA, R.**
**Ist. sull'Inquinam. Atmosfer. C.N.R.**
**00016 Monterotondo Scalo (IT)**

• **ALLEGRINI, I.**
**Ist. sull'Inquinam. Atmosfer C.N.R.**
**00016 Monterotondo Scalo (IT)**

(74) Representative: **Banchetti, Marina et al**
**Barzanò & Zanardo Roma S.p.A.**
**Via Piemonte 26**
**00187 Roma (IT)**

(56) References cited:
**WO-A-95/00244      US-A- 3 985 017**
**US-A- 4 102 201      US-A- 4 350 037**
**US-A- 5 106 759**

• **BALLESTA ET AL: "Effects of the Diffusion Membrane on Passive Sampling"" ENVIRONMENTAL SCIENCE AND TECHNOLOGY, vol. 27, 1993, pages 2031-2034, AMERICAN CHEMICAL SOCIETY**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns a diffusive sampling device for monitoring organic vapours in ambient air. More specifically, the invention relates to a new passive sampler for monitoring ambient levels of organic vapours, particularly suitable for the medium- and long-term evaluation of the concentration of pollutants present in an atmosphere.

As it is known, the evaluation of air quality and the detection of possible toxic substances present in atmospheres such as workplaces, or in urban or industrial environments particularly exposed to pollution problems, may be carried out either by taking the air samples to be analysed by means of pumps or other air suction equipment (active sampling) or by exploiting the diffusive movement of the molecules in the gaseous medium and the absorbing or adsorbing power of a suitable solid support, in which the substances to be sampled are concentrated without having recourse to air suction equipment (passive or diffusive sampling).

Diffusive sampling is a practical application of Fick's first law, which describes the transfer kinetics of the molecules of a given chemical species in a fluid mass when a concentration gradient of such chemical species is present. If the movement of the molecules is confined within a "tunnel" having a uniform cross-section (diffusion path), the Fick's law may be expressed as follows:

$$\delta Q_i \, / \, \delta S \; \delta t = - \, D_i \, \delta C_i \, / \, \delta L$$

wherein $Q_i$ is the amount of species i passing through a cross-section of area S in the period of time t (expressed, for instance, in moles/(cm$^2$·s)). According to such law, this term is proportional to the concentration gradient in the direction of the mass transfer, $\delta C_i \, / \, \delta L$ (wherein $C_i$ is the concentration of the species i - e.g. in moles/cm$^3$ - and L is the diffusion path length - e.g. in cm), according to a factor, $D_i$ (e.g., in cm$^2$/s), representing the diffusion coefficient of the species i in air.

By integrating the previous expression the following is obtained:

$$C_{i,1} - C_{i,0} = Q_i \, L \, / \, S \, t \, D_i$$

wherein $C_{i,1}$ is the concentration of the chemical species i at the entrance of the sampler, i.e. at the interface between the zone corresponding to the diffusion path and the external environment; $Q_i$ is the amount of species i collected by the sampler; L is the distance between the sampler mouth and the adsorbent layer; S is the cross-sectional area of the diffusion path and t is the sampling time. The value $C_{i,0}$ represents the vapour pressure of the species i at the end of the diffusion path, where the adsorbent layer is placed. If a strong adsorbent is used and the said value may be considered to be equal to zero during the entire sampling time the previous expression may be written as follows:

$$C_{i,1} = Q_i \, L \, / \, S \, t \, D_i$$

or, likewise:

$$Q_i = C_{i,1} \, S \, t \, D_i \, / \, L$$

From the above expression the following term may be deduced

$$\Phi_i = D_i \, S \, / \, L$$

which has the physical dimensions of a flow rate (cm$^3$/sec) even though in diffusive samplers no movement of air is present (virtual flow rate or diffusive uptake rate). Such sampling rate is, theoretically, a constant, but this is due to the assumption that the value of $C_{i,1}$ (which, as noted above, represents the concentration at the entrance of the sampler) is equal to the ambient concentration. In order for this to occur, it is necessary that the concentration gradient in such point be negligible: it is necessary, therefore, that the competition between the turnover due to the spontaneous movement of air and the concentration reduction due to the presence of the sampler be largely in favour of the air turnover.

For the above reason, all diffusive samplers work in steady state conditions only when the air velocity exceeds a given limit, and are unreliable when the air velocity is below such limit. The air velocity threshold below which the determination according to the above expression is unreliable depends on the structural and geometrical features of the sampler itself.

From the above considerations it is evident that the constancy of the sampling rate, and therefore the accuracy of a passive sampler in variable environmental conditions, will be increasingly high as the cross-sectional area S decreases and as the diffusion path length L increases. Since, on the contrary, the sampling rate is directly proportional to S and inversely proportional to L, it is evident that, in practice, the design of a passive sampler must represent a compromise between the need to collect the most suitable amount of sample in view of the system employed for the analysis and the need to provide a sufficient accuracy for the detection to be reliable.

In addition, it should be noted that the adsorbent material affords a constant sampling rate in so far as the value $C_{1,0}$ (i.e., the vapour pressure at the end of the diffusion path) may be considered to be constant. When the mass collected by the sampler - not only the mass of a single chemical species i, rather the total mass of all adsorbed species - exceeds a given threshold, depending on the nature and the amount of the adsorbent employed, the value of $C_{1,0}$ increases to reach the ambient concentration of the species i, this limit representing the saturation level.

Beyond a given time limit, therefore, the sampling rate $\Phi_i$ as defined above loses its feature of being constant. Such limit value of the sampling time depends on the ambient concentration of the species being sampled, as well as on the total amount of adsorbent; in addition, the said limit may be remarkably lower, if the adsorbent material has hydrophilic properties (as is the case of active charcoal), in conditions of high relative humidity.

On the other hand, considering the influence of temperature and pressure on the process of diffusive sampling, it is possible to show, on a theoretical basis, that the amount of sample collected in a fixed time is practically independent of the pressure conditions of the sampling operation, and depends on the square root of the temperature, thus having negligible variations at least in a $\Delta T$ range not exceeding 20°C.

From the foregoing it may be understood that the reliability features of a diffusive sampler depend, in a more or less complex way, on the following parameters:

- area of the inlet passage in the direction perpendicular to the sampling direction (in practice, the surface area of the sampler mouth);
- diffusion path length (i.e., the distance between the sampler mouth and the adsorbent layer);
- strength of the adsorbent employed (i.e., the specific surface and/or other physico-chemical properties of the material);
- thickness of the adsorbent layer.

Any variation in each of the above parameters has a direct influence not only on the accuracy and the precision of the detection, but also on the practical possibility of obtaining an amount of sample compatible with the analytical systems employed.

The use of passive samplers for the determination of volatile organic compounds has recently found a wide diffusion, mainly in view of their cheapness and handiness in comparison with active samplers. Passive samplers are being increasingly employed mainly as a means of safety control in workplaces, e.g. in industrial plants. For this reason, almost all of the many devices presently on the market are designed for use as "personal samplers", i.e. as devices to be worn or carried on the body during work, for the individual monitoring of the level of exposure to contaminants and toxic agents.

A review on passive samplers is presented, e.g., by D.C.M. Squirrel (Diffusive Sampling: an Overview, in Diffusive Sampling: An Alternative Approach to Workplace Air Monitoring; Proceedings of the International Symposium held in Luxembourg, 22-26 Sept. 1986, A. Berlin, R.H. Brown and K.J. Saunders eds.; pp. 29-45). The paper synthetically describes the various types of known passive samplers dividing them in two groups according to the method of collection/analysis of the chemical species to be detected, i.e., the passive samplers based on the use of chemical reagents and those based on the sorption of the concerned species on a suitable solid support. Each group includes both devices with tubular configuration and devices with "badge" configuration, i.e. having a badge-like shape and size.

The passive samplers based on the use of chemical reagents exploit a suitable reagent dispersed on a suitable support to produce a chemical reaction with the pollutant. The said reaction may be evidenced by direct reading or by instrumental reading. Direct-reading devices exploit colorimetric reactions which produce colour changes directly detectable by sight, the brightness of which is proportional to the pollutant concentration. In instrumental reading devices the occurrence of the chemical reaction, and therefore the presence and the concentration of the monitored substance, are translated in a corresponding weight or colour change, or in a change in electrical conductivity or in other physico-chemical properties, which change is then quantified by an instrumental measurement.

The devices based on the reversible adsorption of the compounds to be monitored on suitable porous materials, from which said compounds may be recovered either by solvent extraction or by thermal desorption, are much more widespread, owing to their versatility and to their ability to sample more different pollutants at the same time.

US 4 102 201 discloses a sampling device using a liquid elutant to desorb a selected component from a collecting layer.

The systems based on solvent extraction were the first ones to be developed and are still widely used. These comprise, firstly, devices of the "badge" type, suitable for use as personal samplers but unsuitable for being placed in fixed sites for environmental monitoring. One of the few commercial devices of this kind having a tubular configuration is the sampler marketed by Dräger under the trade name ORSA 5 (see, e.g., D.C.M. Squirrel, *loc. cit.*, page 39). Such sampler, employing an adsorbent loading of vegetal active charcoal, undergoes, at the end of the exposure, a solvent extraction treatment aimed at recovering the compounds collected. In order to carry out such operation the adsorbent is transferred from the sampler to a suitable extraction vial, and the resulting solution is then analysed, generally by gas-chromatography. It is evident that the handling needed for transferring the adsorbent from the sampler to the extraction vial may result in losses of the sampled species, in contaminations from the external environment, and in general, in "artifacts" which negatively affect the reliability of the analytical determination.

Also in order to avoid such drawback, some diffusive samplers have been more recently developed wherein the chemical species collected is recovered by thermal desorption. After the exposure, the sorbent material is heated at high temperature under an inert gas flow, which transfers the adsorbed substances to an analytical system, normally a gas-chromatograph. A commercial example of such solution is the Perkin-Elmer sampling system (D.C.H. Squirrel, *loc. cit.*, pp. 40-41), with tubular stainless steel samplers having the open end, to be exposed to ambient air for the sampling, provided with a silicone permeation membrane, a suitable packing of polymeric adsorbent material (such as those known under the trade names Chromosorb® and Tenax®) placed downstream a relatively short diffusion path, and an end cap at the opposed end of the tube. By opening the latter, after the exposure, the sampler may be connected to an automated thermal desorber, coupled with a gas-chromatographic apparatus (Perkin-Elmer ATD-50® system - automated thermal desorption).

Another type of diffusive sampler having a substantially similar structure, and working by thermal desorption, is disclosed in the U.S. patent No. 4636227. The said sampler is characterised by the presence, in a substantially tubular body, of two chambers having different diameter, namely a first sampling chamber and a second desorption chamber. The sampling chamber, having a larger diameter and ending in a mouth exposed to the external environment and protected at the end by a metal mesh, houses, downstream the diffusion path, a layer of polymeric adsorbent material (Tenax®). The desorption chamber, coaxial with the first chamber and having a smaller diameter, houses the adsorbent material (transferred therein by inverting the device) when the desorption operation is carried out. Also in this case the recovery of the sampled compounds is accomplished by feeding high temperature nitrogen through the adsorbent, and analysing that resulting stream of nitrogen and desorbed vapours by gas-chromatography.

A further tubular passive sampler wherein the chemical substances sampled are recovered by thermal desorption is disclosed in the European patent publication EP-A-0350992. The characterising feature of said sampler, in comparison with the Perkin-Elmer device referred to in the foregoing, consists in that the tubular element enclosing the adsorbent layer is pre-packed in sealed form, closed at both ends. In use, one of the two ends is opened by breaking the tubular element along a break seal placed at the starting point of the desired diffusion path. After the sampling period, the said first end may be reclosed with a suitable sealing cap in order to prevent any contamination of the sample before the analysis. To carry out the analysis, also the second end of the tubular device, provided with a similar break seal, is opened and, after removing the sealing cap from the first end, the sampler undergoes a thermal desorption treatment as described previously.

The passive samplers suitable for thermal desorption have lately attracted much interest, also in view of the fact that such samplers may be coupled with automated systems for the recovery and the analysis of the sampled substances, allowing a better standardisation in large scale operations. However, such systems require the use of costly equipment (in practice, a "desorption" apparatus to be coupled with the gas chromatograph), and also have the drawback of allowing only one analysis for each desorbed sample. On the contrary, the system with recovery of the sampled substances by solvent extraction, besides being globally cheaper, allows to repeat several times the analysis on the same sample, using each time an aliquot of the solution obtained from the extraction.

Therefore, it is an object of the present invention to provide a new diffusive sampler specifically suitable for use in monitoring the quality of ambient air in urban, suburban or industrial areas, or in indoor environments, which shows the advantage -typical of passive samplers with recovery of the sampled substances by solvent extraction- of being structurally simple and unexpensive and, at the same time, is free from the problems of poor reliability or precision mentioned in the foregoing. In addition, the concerned device should be able to detect even minimal amounts of polluting substances present in an atmosphere, while working in an optimal way even in conditions of extremely low velocity of the ambient air.

To achieve such purpose, the present invention proposes to endow a passive sampling device of the adsorption type, having a tubular configuration, with a system allowing to avoid the transfer of the adsorbent material, after the sampling period, to an extraction vial for the recovery of the collected substances, thus making it possible to perform the solvent extraction directly in the sampler. As a consequence, any contamination or loss of the adsorbed samples is prevented. Such double use of the sampler is made possible, on one hand, by the structural configuration of the device and, on the other hand, by a proper choice of the materials employed for making the various components thereof. Such materials should prevent any losses of the sampled substances and should not chemically interact therewith, nor they should allow any permeation to occur.

Accordingly, the present invention specifically provides a diffusive sampling device for monitoring organic vapours in ambient air, of the type with desorption of the sampled species by solvent extraction, comprising a container made of a chemically inert, gas- and liquid-impervious material, having a closed bottom end and an open end opposed thereto and containing, at its bottom end, a layer of solid porous material capable of uptaking the chemical substances to be sampled by physical or chemical adsorption, and a gas- and liquid-tight closure element which may be coupled to the said open end, having an exposed portion closed by a pierceable membrane suitable to allow the introduction of a hollow needle for the injection of a solvent and the withdrawal of the resulting solution, **characterized in that** said device is suitable for environmental monitoring for periods of not less than one month in a fixed site, its container (2) being tubular in shape, with a cylindrical tumbler-like configuration, a diameter of 20 mm, a height of 24 mm and a thickness of the adsorbent material of 4 mm.

The material of which the container is made is preferably chosen from the group consisting of: glass, stainless steel, quartz, aluminium, chromium- or nickel-plated metallic materials, anodized metallic materials, inert and impervious polymeric materials, such as Teflon. The solid adsorbent material placed as a layer at the closed bottom end of the container according to the invention is chosen among the materials already known and employed for such purpose, including, e.g., active charcoal, graphitised charcoal, silica gel, polymeric adsorbent materials (such as Chromosorb[®] and Tenax[®]), molecular sieves, silica with bound organic supports, carbon fabrics or, also, among absorbent materials impregnated with substances capable of chemically reacting with the substances to be sampled, such as, e.g., porous charcoals impregnated with acid or basic substances, impregnated cellulose, inert porous materials impregnated with chemically reactive substances.

The sampling operation is carried out by keeping the above container (i.e., the device according to the invention deprived of the closure element) with its open end facing downwards, in order to avoid any contamination by ambient particulate material. For such purpose, the sampler is preferably provided with a hanger loop allowing to suspend the said container in its proper position.

Once the sampling operation is completed, the container is closed by means of the said closure element. The latter provides a gas- and liquid-tight protection to the material collected by the sampler and, at the same time, allows to employ the sampling device, maintained in an overturned position with respect to the sampling phase, as an extraction vial, thus avoiding any transfer of the collected material. In order to perform such function, the closure element is equipped with a peirceable membrane, so that the solvent may be injected into the container without opening the latter, simply by means of a syringe needle. To carry out the analysis, the solvent and the "internal standard" are injected into the container and, after the period of time required for the extraction, the aliquots of solution to be injected into the chromatograph are withdrawn in the same manner, by means of a suitable syringe.

Further structural and functional features of the sampling device according to the invention are specified in the further dependent claims. The said features, as well as the advantages of the invention, will be clearer with reference to a specific embodiment thereof, which is shown, by way of example only in the accompanying drawings, wherein:

Figure 1 is a perspective view of an embodiment of the proposed sampler;
Figure 2 is a longitudinal cross-sectional view of the same sampler, deprived of the closure element and kept in the sampling position; and
Figure 3 is a longitudinal cross-sectional view of the sampler of Fig ures 1 and 2, including the closure element and kept in the storage or analysis position.

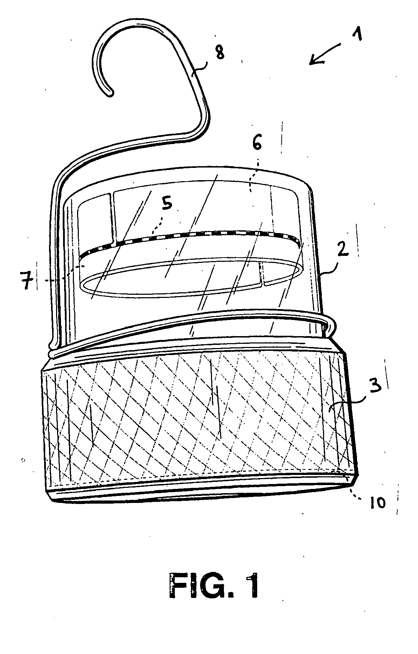

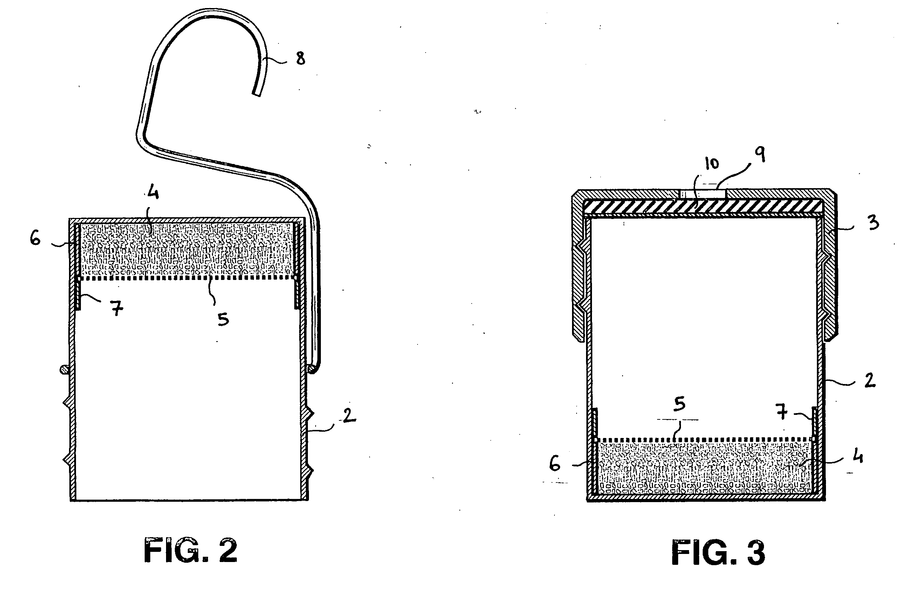

As it is shown in Figures 1-3, the sampler (1) substantially consists of a glass-made container (2) shaped as a cylindrical tumbler, and of a screw cap (3) made of plastics (not shown in Fig. 2), which may be coupled to the correspondingly threaded end of the container (2). The container (2) materially realizes the geometric features of the "diffusion path" on which the sampling rate depends and, in addition, it serves as an extraction vial after the sampling phase. The preferred size of the said container is 20 mm in diameter by 24 mm in height. In general, however, the diameter of said container is comprised between 10 and 30 mm and the height is comprised between 10 and 60 mm. As shown in Figures 2 and 3, the bottom of the container (2) houses a layer of mineral active charcoal (4), in the form of granules with high specific surface (1000 $m^2$/g). The latter underwent a previous "clean-up" treatment in order to reduce any interference to a minimum. The layer of active charcoal (4) has a preferred thickness of 4 mm, and is held in place by a metal net (5) made of stainless steel, having a mesh sufficiently fine to prevent the passage of the granules of active charcoal (4). As an alternative, the net (5) may be made of an inert polymeric material, or it may be replaced by a permeable membrane.

In order to hold the layer of active charcoal (4) and the metal net (5) in their proper position at the bottom of the container (2), the embodiment shown in the figures employs a spacer ring (6), made of stainless steel, placed on the bottom of the container (2) so as to form an abutment rib on which the metal net (5) rests. The spacer ring (6) co-operates with a second retaining ring (7), also made of stainless steel, bearing a transversal cut in order to be firmly housed in the container (2). The spacer ring (6) allows to control in a correct and repeatable way the level of the adsorbent layer, thus maintaining the preset geometry of the diffusion path, while the retaining ring (7) prevents any undesired displacement of the said adsorbent layer. In a different embodiment, the spacer ring (6) may be replaced by an annular rib integral with the container (2), on which the net (5) or the alternative permeable membrane abuts.

In the sampling position, shown in Figure 2, the container (2) of the device according to the invention, open and overturned, is held in a suspended position by a metal hook (8) (also shown in Figure 1). The latter may be removed for storing the device before use, or in the analysis phase, as shown in Figure 3.

As it is more evident in Figure 3, the screw cap (3) is provided with a central hole (9), and is coupled to a sealing membrane (10) consisting in a double layer made of rubber (on the outer side) and Teflon (on the inner side). The rubber/Teflon membrane (10) is readily pierced by means of a syringe needle, but provides a full seal to the container throughout the storage phase, while the Teflon lining placed in contact with the glass container maintains the continuity of the inert material enclosing the adsorbent layer. As an alternative, the sealing membrane (10) may be made of a layer of elastomeric material coupled to a foil of inert metallic material.

The sampler according to the invention, while being extremely simple from the structural point of view, affords the following advantageous features.

1) Constant sampling rate for air velocities above 10 cm/s, this value corresponding to the average velocity of air in an indoor environment (due to natural convection). Therefore, the sampler may work in optimal conditions even with a minimum velocity of the ambient air. In contrast, other similar commercial devices, having a sampling rate strongly dependent on the air velocity, loose their accuracy and precision when employed in conditions of still or weakly moving air.

2) Great loading capacity, allowing to obtain a constant sampling rate even in presence of high relative humidity and high concentrations of organic vapours, for periods of time of more than one month.

3) Absence of artifacts deriving from permeation or back diffusion phenomena and, most importantly, from the handling of the adsorbent material after the sampling phase. As noted in the foregoing, there is no need to transfer the adsorbent material, since the sampling device also serves as an extraction vial.

4) Good sensitivity, resulting in the possibility of easily detecting, with sufficient accuracy, atmospheric concentrations above 0.1 mg/m$^3$ (it should be considered, for instance, that the limit set by law for the concentration of benzene in ambient air is, at present, 10 $\mu$g/m$^3$ as an annual average).

5) In addition, the compactness of the structure and the intrinsic properties of the materials of which the device is made theoretically exclude - and the experimental results confirm this assumption - any possible contamination and/or loss of the sample in every working phase, i.e., storage before the use, use in the sampling operation, storage of the evice after the sampling, solvent extraction and analysis of the eluate.

It should be noted, in addition, that the device according to the invention is also suitable for being used in industrial sites for detecting the average daily values, working within concentration ranges of from 0.1 to 10 times the concentrations allowed in such environments.

As a further advantageous feature, the concerned device offers the possibility of using any solvent, except the strong acids, for performing the extraction. Since the solvent may be introduced in the container by piercing the sealing membrane by means of a syringe, the operating conditions are extremely safe even when working with highly toxic substances.

The present invention will be described, for illustrative purposes, in the following examples of experimental application. These should not be intended as having any limitative effect on the scope of the invention.

EXAMPLE 1

Experimental determination of the "virtual flow rate"

The expression $\Phi_i = D_i S / L$, referred to in the foregoing, allows to evaluate the theoretical "virtual flow rate" of the sampling from the geometric details of the sampler and from the diffusion coefficient value. In practice, however, the experimental values seldom coincide with the theoretical values, and only laboratory and field tests allow to exactly determine the said parameter. Such laboratory tests, in addition, must reproduce as closely as possible the real conditions of use, as several factors may influence the sampling rate, especially in the long-term monitoring operations.

For the concerned determination 14 passive samplers of the type described in the enclosed drawings were employed. The samplers were hanged from a metal framework placed in a central position in an ample laboratory room. The samplers were suspended from thin nylon threads from 25 cm to 40 cm long, arranged in such a way as to provide interaxial distances between the samplers of not less than 20 cm, and a further vertical staggering on three parallel planes. The distance from the laboratory walls was over 2 m, and the mean sampling plane was placed at more than 1 m from the ceiling and about 2 m from the floor.

Two vials of charcoal (SKC Inc., PA, U.S.A.) loaded with 150 mg each (100 mg + 50 mg controller), were placed at the ends of a diagonal line of the framework. The two vials were used as a reference, sampling by means of two "personal" type pumps (Casella mod. SP15) working with a preset flow rate of 7 cm$^3$/min. At the two ends of the second diagonal line two closed passive samplers were placed, for use in determining the "blank" value of the test. A fan placed in a corner of the room was kept working for the whole sampling period, in order to provide the highest homogeneity of the ambient concentrations. The air velocity, measured by means of a hot-wire anemometere, was 20 cm/s in the sampling zone.

The sampling was carried out for a period of time of 672 hours, during which both temperature and humidity were continuously monitored. The average value of relative humidity was 55%, while the average temperature was 22.5°C.

The same volume of solvent (1.5 ml) and the same amount of internal standard (10 $\mu$g of chlorobenzene) were then added to the passive samplers and to the active samplers used as a reference, and the analysis was carried out by gas-chromatography (employing a HRGC MEGA gas-chromatograph, by Carlo Erba, equipped with a 30 m x 0.32 mm I.D capillary column, 0.25 $\mu$m df, of the SPB-5 type, by Supelco, a flame ionization detector (FID) and a Hewlett Packard HP 3396A integrator). The analysis was repeated three times for each sample.

The procedure for determining the "virtual flow" is as follows. From a comparison with the internal standard the amount $Q_{i,r}$ of the chemical species i collected in the reference vial is calculated. The sampling volume of the latter, $V_r$, is known, since the sampling is effected by means of a pump. Then, the proportion: $Q_{i,r} * V_r = Q_{i,c} * V_v$ is applied, wherein $Q_{i,c}$ is the amount of species i collected and analitically determined by the passive sampler. The volume virtually sampled, $V_v$, is thus calculated from the product of the volume, $V_r$, actively collected, multiplied by the ratio between the amounts of analyte determined. By dividing $V_v$ by the exposure time of the sampler the value of the virtual flow is obtained, as follows: $\Phi_v = V_v / t$.

The $\Phi_v$ values experimentally determined for BTX (i.e., benzene, toluene and xylene), as well as the percent standard error as deduced from the statistical analysis of the experimental results, are shown in the following table.

TABLE 1

| Compound | Experimental $\Phi_v$ (ml/min) | Std. error (%) | 90% confidence limit (%) |
|---|---|---|---|
| benzene | 7.15 | 5.2 | 8.8 |
| toluene | 6.37 | 3.0 | 5.1 |
| m+p-xylene | 5.55 | 6.13 | 10.4 |

The results shown in the above table, obtained from a sampling test of four weeks using some active samplers as a reference, coincide, within the limits of the error, with the values calculated from previous tests. Such coincidence allows to extend the validity of the calculated values to short-term sampling operations as well, and to concentrations above the ambient concentrations.

The standard error and the confidence limit obtained are equal to, or even better than the values obtained with the reference active samplers.

EXAMPLE 2

Evaluation of the "back diffusion" and of the "storage"

In the event that the vapour pressure of an adsorbed compound exceeds the ambient concentration thereof, i.e. $C_{i,o} \geq C_{i,a}$, the said compound partly migrates towards the exterior. This phenomenon, referred to as "back diffusion", is particularly considerable for the substances having a high vapour pressure.

The back diffusion must be evaluated for two reasons: firstly, if such phenomenon occurs during the sampling phase, owing to the variability of the atmospheric concentration (which in some cases may fall to values close to zero), the concentration of the substance of interest is underestimated. Secondly, such evaluation is necessary since further losses of sample may occur in the storage phase.

In order to evaluate he back diffusion of BTX, 9 passive samplers of the same type as those previously described were employed. The samplers were exposed in a drying chamber of 10 l of capacity, serving as a sampling chamber. One $\mu$l of a BTX mixture, corresponding to about 300 $\mu$g of each chemical species, was injected by means of a micro-syringe through a silicone membrane suitably housed in the cover of the drying chamber, in place of the vacuum tap. Then, a sampling time of 24 hours was allowed to pass, sufficient for the whole sample to be absorbed. At the end of the operation, three samples underwent the extraction and analysis immediately, three samplers were stored closed and were analyzed after a storage time of 10 days at room temperature and the other three samplers were placed, open, in a glass cylinder through which a weak stream of air (zero air flow) was made to pass, for a period of time of 10 days. These samplers were analyzed together with the samplers that had been stored closed.

The following table shows the results obtained by assigning the value 100 to the amounts found in the samplers analyzed right after the sampling phase (column A), the corresponding ratio for the samplers that had been stored closed (column B) and the ratio for the samplers that had been stored open in a zero air flow (column C).

TABLE 2

| Compound | A | B | C |
|---|---|---|---|
| benzene | $100 \pm 10$ | $99 \pm 10$ | $96 \pm 9$ |
| toluene | $100 \pm 8$ | $101 \pm 8$ | $100 \pm 9$ |
| o-xylene | $100 \pm 11$ | $100 \pm 12$ | $102 \pm 12$ |

Although the above values may be considered to coincide, within the limits of the experimental error, there may be noted a slight reduction of the benzene amount in the samplers that had been exposed to a zero air flow. Such reduction, however, appears to be practically irrelevant, also in view of the fact that the sampled amounts were two orders of magnitude higher than those obtainable in a normal environmental monitoring. Thus, the value of $C_{i,o}$ had been artfully emphasised, in order to obtain in any case a reference about the importance of the concerned phenomenon.

EXAMPLE 3

Field tests

In order to test the sampler performance in real working comditions a small-scale measurement campaign was carried out, in situations corresponding to the intended use of the sampler.
18 passive samplers of the type described in the enclosed drawings were placed in three different sites. For each site, one set of samplers was placed in an outdoor location and another set was placed indoors. Each group consisted of three devices, each placed at 3 m from the ground, sufficiently far from any walls and, in all cases, protected from any atmospheric precipitation. Two of the three devices were open and the third one was closed, for the blank value tests. The sites chosen for the test are the following ones:

- a shop located in Rome, in a road with heavy vehicular traffic, and the same road, at the entrance of the same shop;
- a flat on the sixth floor in a road adjacent to the previous site (inner corridor), and the terrrace of the same flat;
- a flat on the sixth floor in the municipality of Monterotondo (in the Rome province), close to the Salaria road (inner corridor), and the terrace of the same flat.

All samplers were kept in place for one month. The following table shows the BTX concentration values as detected in the above sites.

TABLE 3

| | Rome Outdoors ground floor | Rome Indoors ground floor | Rome Outdoors terrace on 6th fl. | Rome Indoors flat on 6th fl. | M.Rotondo Outdoors terrace on 6th fl. | M.Rotondo Indoors flat on 6th fl. |
|---|---|---|---|---|---|---|
| benzene | 114 | 24.4 | 26.2 | 9.0 | 4.7 | 3.8 |
| toluene | 433 | 84.8 | 103 | 38.6 | 23.3 | 26.3 |
| m+p-xylene | 206 | 33.8 | 48.4 | 16.1 | 10.1 | 8.1 |

The values resulting from the sampling cover a wide concentration range, and clearly evidence - besides the ample variability of the atmospheric concentrations - the versatility of use of the sampling device according to the invention. The concentration values show a negative gradient as the height from the ground floor and as the distance from large urban centres increases. In addition, the indoor values are remarkably lower than the outdoor values when high concentrations are present. This is probably due, mainly, to the choice of the timing for the air turnover (if the turnover is effected when the outdoor concentrations are close to the minimum daily values the indoor air is maintained in less polluted conditions) and, in addition, to the lower ratio of volume to surface area, which favours the adsorption of the pollutants and the removal thereof from ambient air.

The present invention has been disclosed with particular reference to some specific embodiments thereof, but it should be understood that modifications and changes may be made by the persons skilled in the art without departing from the scope of the invention as defined in the appended claims.

## Claims

1. A diffusive sampling device (1) for monitoring organic vapours in ambient air, of the type with desorption of the sampled species by solvent extraction, comprising a container (2) made of a chemically inert, gas- and liquid-impervious material, having a closed bottom end and an open end opposed thereto and containing, at its bottom end, a layer of solid porous material (4) capable of uptaking the chemical substances to be sampled by physical or chemical adsorption, and a gas- and liquid-tight closure element (3) which may be coupled to the said open end, having an exposed portion closed by a pierceable membrane (10) suitable to allow the introduction of a hollow needle for the injection of a solvent and the withdrawal of the resulting solution, **characterized in that** said device is suitable for environmental monitoring for periods of not less than one month in a fixed site, its container (2) being tubular in shape, with a cylindrical tumbler-like configuration, a diameter of 20 mm, a height of 24 mm and a thickness of the adsorbent material of 4 mm.

2. A device according to claim 1 wherein the said inert and impervious material of the tubular container (2) is chosen from the group consisting of: glass, stainless steel, quartz, aluminium, chromium- or nickel-plated metallic materials, anodized metallic materials, inert and impervious polymeric materials.

3. A device according to any one of claims 1 or 2, wherein the said solid porous material (4) is chosen from the group consisting of: active charcoal, graphitised charcoal, silica gel, polymeric adsorbent materials, molecular sieves, silica with bound organic supports, carbon fabrics, porous charcoals impregnated with acid or basic substances, impregnated cellulose, inert porous materials impregnated with chemically reactive substances.

4. A device according to any one of claims 1-3 wherein said closure element (3) consists of a screw cap which may be coupled to the threaded open end of said tubular container (2) and has a perforated portion (9), and of a pierceable membrane (10) sealingly placed between said open end of the container (2) and said screw cap.

5. The device according to claim 4 wherein said pierceable membrane (10) is made of a double layer of elastomeric material and Teflon, or of a layer of elastomeric material coupled to a foil of inert metallic material.

6. A device according to any one of claims 1-5 wherein said layer of solid porous material (4) is kept in place at the bottom of said container (2) by a net (5) made of stainless steel or of an inert polymeric material, having sufficiently fine mesh to prevent the passage of the said solid porous material (4), or by a permeable membrane.

7. A device according to claim 6 wherein on the bottom of said container (2) there is provided an annular spacer element (6), or an annular rib integral with said container (2), on which said net (5) or said permeable membrane abuts.

8. The device according to claim 7 wherein said net (5) or said permeable membrane is kept in place by an annular retaining element (7) placed against said annular spacer element (6) or said annular rib.

## Patentansprüche

1. Vorrichtung (1) zur diffusiven Probenentnahme für die Überwachung von organischen Dämpfen in Umgebungsluft vom Typ der Desorption der abgetasteten Spezies durch Lösemittel-Extraktion, mit einem aus chemisch inertem, für Gas und Flüssigkeit undurchlässigem Material bestehenden Behälter (2), der ein geschlossenes Bodenende und ein hierzu entgegengesetztes offenes Ende hat und an seinem Bodenende eine Schicht aus festem porösem Material (4) enthält, das in der Lage ist, die abzutastenden chemischen Substanzen durch physikalische oder chemische Adsorption aufzunehmen, und mit einem an das offene Ende ankoppelbaren gas- und flüssigkeitsfesten Verschlusselement (3), das einen freiliegenden Teil hat, der durch eine durchstechbare Membran (10) geschlossen ist, die geeignet ist, das Einführen einer Hohlnadel für die Injektion eines Lösemittels und die Entnahme der sich ergebenden Lösung zu erlauben, **dadurch gekennzeichnet, dass** die Vorrichtung zur Umgebungsüberwachung für Zeitperioden von nicht weniger als einem Monat in einem festen Standort geeignet ist, wobei ihr Behälter (2) rohrförmig ist mit einer zylindrischen trommelartigen Konfiguration, einem Durchmesser von 20 mm, einer Höhe von 24 mm und einer Dicke des adsorbierenden Materials von 4 mm.

2. Vorrichtung nach Anspruch 1, wobei das inerte und undurchlässige Material des rohrförmigen Behälters (2) aus der folgenden Gruppe gewählt ist: Glas, rostfreier Stahl, Quarz, Aluminium, verchromte oder vernickelte Metallmaterialien, anodisierte Metallmaterialien, inerte und undurchlässige Polymermaterialien.

3. Vorrichtung nach einem der Ansprüche 1 oder 2, wobei das feste poröse Material (4) aus der folgenden Gruppe gewählt ist: Aktivkohle, graphitisierte Kohle, Silikagel, polymere Adsorptionsmaterialien, Molekularsiebe, Silika mit gebundenen organischen Trägern, Carbonstoffe, mit Säure oder basischen Substanzen imprägnierte poröse Kohle, imprägnierte Cellulose, mit chemisch reaktiven Substanzen imprägnierte inerte poröse Materialien.

4. Vorrichtung nach einem der Ansprüche 1 bis 3, wobei das Verschlusselement (3) aus einer Schraubkappe, die an das mit einem Gewinde versehene offene Ende des rohrförmigen Behälters (2) angekoppelt werden kann und einen gelochten Teil (9) hat, und aus einer abdichtend zwischen das offene Ende des Behälters (2) und die Schraubkappe eingesetzten durchsteckbaren Membran (10) besteht.

5. Vorrichtung nach Anspruch 4, wobei die durchstechbare Membran (10) aus einer Doppelschicht aus elastomerem Material und Teflon gebildet ist oder aus einer Schicht aus elastomerem Material, die an eine Folie aus inertem Metallmaterial gekoppelt ist.

6. Vorrichtung nach einem der Ansprüche 1 bis 5, wobei die Schicht aus festem porösem Material (4) am Boden des Behälters (2) am Platz gehalten wird durch ein aus rostfreiem Stahl oder einem inerten polymeren Material gebildetes Netz (5), das eine ausreichend feine Maschenweite hat, um den Durchtritt des festen porösen Materials (4) zu verhindern, oder durch eine durchlässige Membran.

7. Vorrichtung nach Anspruch 6, wobei am Boden des Behälters (2) ein ringförmiges Abstandselement (6) oder eine mit dem Behälter (2) einstückige ringförmige Rippe vorgesehen ist, worauf das Netz (5) oder die durchlässige Membran aufliegt.

8. Vorrichtung nach Anspruch 7, wobei das Netz (5) oder die durchlässige Membran durch ein ringförmiges Haltelement (7) am Platz gehalten wird, das gegen das ringförmige Abstandselement (6) oder die ringförmige Rippe platziert ist.

**Revendications**

1. Dispositif d'échantillonnage diffusif (1) pour contrôler des vapeurs organiques dans l'air ambiant, du type avec désorption des espèces échantillonnées par extraction au solvant, comprenant un conteneur (2) constitué d'une matière chimiquement inerte imperméable aux gaz et aux liquides, présentant une extrémité inférieure fermée et une extrémité ouverte opposée à celle-ci et contenant, au niveau de son extrémité inférieure, une couche de matière poreuse solide (4) capable de capter les substances chimiques à échantillonner par adsorption physique ou chimique, et un élément de fermeture étanche aux gaz et aux liquides (3) pouvant être couplé à ladite extrémité ouverte, présentant une partie exposée fermée par une membrane pouvant être percée (10) adaptée pour permettre l'introduction d'une aiguille creuse destinée à injecter un solvant et le retrait de la solution résultante, **caractérisé en ce que** ledit dispositif est adapté pour contrôler l'environnement pendant des périodes supérieures ou égales à un mois dans un site fixe, son conteneur (2) présentant une forme tubulaire, avec une configuration cylindrique de type tambour, un diamètre de 20 mm, une hauteur de 24 mm et une épaisseur de la matière adsorbante de 4 mm.

2. Dispositif selon la revendication 1, dans lequel ladite matière inerte et imperméable du conteneur tubulaire (2) est sélectionnée dans le groupe constitué par le verre, l'acier inoxydable, le quartz, l'aluminium, les matériaux métalliques plaqués de chrome ou de nickel, les matériaux métalliques anodisés et les matériaux polymères inertes et imperméables.

3. Dispositif selon l'une quelconque des revendications 1 ou 2, dans lequel ladite matière poreuse solide (4) est sélectionnée dans le groupe constitué par le charbon actif, le charbon graphitisé, le gel de silice, les matériaux adsorbants polymères, les tamis moléculaires, la silice présentant des supports organiques liés, les tissus au carbone, les charbons poreux imprégnés de substances acides ou basiques, la cellulose imprégnée et les matériaux poreux inertes imprégnés de substances réactives chimiques.

4. Dispositif selon l'une quelconque des revendications 1 à 3, dans lequel ledit élément de fermeture (3) est constitué par un bouchon à vis pouvant être couplé à l'extrémité ouverte filetée dudit conteneur tubulaire (2) et présente une partie perforée (9), et par une membrane pouvant être percée (10) placée de manière scellante entre ladite extrémité ouverte du conteneur (2) et ledit bouchon à vis.

5. Dispositif selon la revendication 4, dans lequel ladite membrane pouvant être percée (10) est constituée d'une double couche de matière élastomère et de Teflon, ou d'une couche de matière élastomère couplée à une feuille de matière métallique inerte.

6. Dispositif selon l'une quelconque des revendications 1 à 5, dans lequel ladite couche de matière poreuse solide (4) est maintenue en place au fond dudit conteneur (2) par un filet (5) constitué d'acier inoxydable ou d'une matière polymère inerte et présentant un maillage suffisamment fin pour empêcher le passage de ladite matière poreuse solide (4), ou par une membrane perméable.

7. Dispositif selon la revendication 6, dans lequel, au fond dudit conteneur (2) est disposé un élément d'espacement annulaire (6) ou une nervure annulaire constituée d'une seule pièce avec ledit conteneur (2), sur lequel ou laquelle est abouté(e) ledit filet (5) ou ladite membrane perméable.

8. Dispositif selon la revendication 7, dans lequel ledit filet (5) ou ladite membrane perméable est maintenu(e) en place par un élément de rétention annulaire (7) placé contre ledit élément d'espacement annulaire (6) ou ladite nervure annulaire.

FIG. 1

FIG. 2

FIG. 3

EP 1 114 307 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4102201 A
- US 4636227 A

- EP 0350992 A

### Non-patent literature cited in the description

- Diffusive Sampling: an Overview, in Diffusive Sampling: An Alternative Approach to Workplace Air Monitoring. **D.C.M. Squirrel.** Proceedings of the International Symposium held in Luxembourg. 22 September 1986, 29-45